# EUROPEAN PATENT APPLICATION

(11) **EP 2 527 026 A1**
(43) Date of publication of application: **28.11.2012**
(21) Application number: 11734313.7
(22) Date of filing: 10.01.2011
(51) Int. Cl.: B01D 47/06

(54) **NEUTRALISATION OF GASEOUS CONTAMINANTS BY MEANS OF ARTIFICIAL PHOTOSYNTHESIS**

(30) Priority: 19.01.2010 CL 352010
(71) Applicant: Masteridea S.A., Santiago 7550000 (CL)
(72) Inventor: GONZÁLEZ PORTALES, Luis Vicente, Santiago 7550000 (CL); OLIGER GONZALEZ, Jean Paul, Puente Alto Santiago 7550000 (CL)
(74) Representative: Kador & Partner
(86) International application number: PCT/CL2011/000002
(87) International publication number: WO 2011/088584

(57) **Abstract**

The invention relates to an artificial photosynthesis system and process used to neutralise harmful elements from any type of combustion, reducing the volume and initial pressure of the gases, by means of the kinetic energy produced by the accelerated recirculation of the gases according to the principle of molecular resonance or gas resonance, in order to then release oxygen and innocuous liquid substances by means of physical and chemical processes. Said system comprises a main chamber provided with a main gas inlet and a gas outflow tube, the main chamber comprising: a tube with nozzles arranged in the lower part of the main chamber enabling the passage of steam in the form of a steam curtain; a propeller; flexible tubes that protrude from the main chamber and connect to the main gas inlet; an electric motor for gas extraction, enabling the pressurised inflow of the gases towards the flexible tube; an evacuation duct connecting the main chamber to a secondary chamber that comprises an inlet tube for the gases from the main chamber and a gas outflow duct arranged in the upper end of the secondary chamber, the secondary chamber comprising: a plurality of connected units of plastic foam comprising a perforated sheet of aluminium at the connection points of each unit; a high-power centrifuge extractor outside the upper end of the secondary chamber; and tubes for ejecting the liquid residues, arranged in the lower part of the primary chamber and the secondary chamber.

## Description

This invention relates to a gaseous pollutants neutralization system and process through an artificial photosynthesis autonomous system denominated "SAFA".

### Prior Art

It is helpful to take into account some technical and historical aspects of the problem of environmental pollution. The greenhouse effect is the best reference.

Throughout this century, and through further global industrialization, we have witnessed a worldwide environmental catastrophe, with high levels of pollutants coming from industrial processes, man, and their derivatives (such as transportation and other mobile sources). The foregoing has increased the natural concentration of gases in the atmosphere as well as added gases having a higher toxicity than those produced naturally. Among the gases that need to be neutralized are carbon monoxide (CO), carbon dioxide (CO₂), chlorofluorocarbons (CFCs), methane (CH₄), and nitrous oxide (N₂O).

The prior art refers to systems or processes that physically or chemically reduce or stop gaseous toxic waste from going into the atmosphere. So far, most of the studies that have been conducted use physical means to filtrate particles through thin membranes, or employ electric shocks to negatively charge particles in order to capture them, or they simply use nozzles that inject certain base solutions (ammonia, urea, etc.) which act as catalysts of certain gases (hydrogen or CO₂) through chemical reactions which neutralize the gases when they react with each other thus converting them into more stable substances, which are less harmful for the environment. However, the production and maintenance of the equipment is very expensive.

Nevertheless, to serve as a plausible reference of the gaseous pollutants neutralization system being novel, we cite here some prior art references present in the Chilean National Industrial Property Institute (INAPI).

Patent No. CL38989, licensed in 1995, refers to a "gases purifier having liquid wash drops, in counterflow of the gases" in which the gases are treated by counterflow; and a series of pumps are used to splash the gases in an aqueous base solution. However, in our invention, no pumps are needed, only kinetic energy and vapor.

Patent No. CL38227 describes a "filter to retain suspension particles contained in the exhausts of internal combustion engines". In this case, there is a filter for particulate material which uses water in the process, through a series of jointed metal channels. Our invention is not only a filter but a gas processor that works through kinetic energy and chemical processes.

Patent No. CL42130 refers to a "wet filter device for all types of particles in industrial smokestacks comprising of a turbo extractor which incorporates a filter mesh, and filtration chambers associated with impeller means and liquid heaters and gas cooler elements". In this case we see another type of filter that uses a mesh to capture large particles, with gas coolers and heaters. This opposes the initial principle of our invention; which is that the process is absolutely autonomous in its operation; and that the internal energy of the system is required to produce the phenomenon of artificial photosynthesis.

Patent N° CL41569, licensed in 2002, describes a "treatment system for contaminated air comprising a station to capture air, a chamber for accumulating gases, an initial decontamination tunnel with floating mesh and sprinklers fed by water, a pool to decant residues, a particle dryer, and a pump to push the decontaminated water". This is another system that uses water as the base of its process, but it can only decant air particles on a large scale, making it almost impossible to apply. It is named here only as a reference.

Chilean patent application No. CL01930-2001 mentions a "chemical-mechanic process to reduce contaminating gases having a first wash step which uses a chemical solution consisting of distilled water, sodium bicarbonate and urea: the latter two compounds at concentration from 5-8% each, followed by two more steps of filtration", published on October 9, 2002. In said application, contaminating gases are reacted with chemical substances at a fixed temperature. Hence, said application falls within a group of catalysts from the prior art of Reduccion Catalítica Selectiva (SRC) (*Selective Catalytic Reduction*). Our invention, by contrast, does not utilize external chemical agents; it only uses water vapor and the kinetic energy of the gases to obtain oxygen.

The patent application No. CL00324-2002 in 2002 refers to a "method to decrease pollutant emissions from stationary or mobile sources of combustion gases comprising the steps of separating said gases in multiple flows, decreasing the temperature of the gases by cooling, subjecting the gases to a washing step, and decanting the particulate material". This application consists of a series of aluminum pipes with different diameters in which the polluted gas passes through and at the same time a solution of distilled water is injected to produce a chemical effect. The form and the active principle are totally different; we do not use a single additional chemical or utilize interlaced linear pipes to perform the process.

We also found patent No. CL 44552 which mentions a "method to purify exhaust gases of an engine, with an arrangement to recirculate gases, wherein a control device is adapted using temperature data and a valve device, to achieve a relationship between NOₓ and soot which is favorable for the regeneration of the filter. This patent refers to a vehicle catalyst device which is able to produce a reduction of NOₓ and soot due to a system of recirculation of gases along with another series of factors. Our invention is not a catalyst, or acts as such in the sense that it is a system that only uses water vapor and kinetic energy to perform the gases neutralization process.

In order to clarify that our system is unique, we cite two international patents that refer to related methods and results, more as a reference than a direct comparison between their final results versus ours.

Patent EP 2119490, published on November 18, 2009, refers to "a system that reduces air pollution comprising an initial step for the liquid reduction of heavy metals, dust, pollen, and polycyclic aromatic hydrocarbons in particle form, a second step of oxidation in water of light hydrocarbons using oxygen from electrolysis, and a third step of transformation of chemicals such as CO₂ into bicarbonate by a reaction with inorganic carbonates. This patent uses chemical reactions with accompanying materials, as in the case of carbonate, to produce the desired effect (bicarbonate in this case). It uses electrolysis to liberate oxygen from water and to activate a reaction with certain hydrocarbons. This contrasts with our invention's use of water vapor and kinetic energy. With our invention, kinetic energy releases the oxygen through an artificial photosynthetic process we developed. The apparatus described in this European application comprises three distinct parts joined together. In our invention we have comprised two complimentary structures instead. One is a horizontal cylindrical structure, and the other is a vertical cylindrical structure with an upward facing gas outlet.

We also cite the patent application US 2009/0016948 A1, dated January 15, 2009 which describes: "it reduces atmospheric carbon dioxide and produces carbon for subsequent use as fuel and, more specifically, refers to a dissolution process of atmospheric carbon dioxide in an adequate flow of alkali metal salt to form carbon and oxygen by an electrolysis process." We note that the physical and chemical processes used to separate carbon from CO2 oxygen, the reactants or catalysts used (electrodes), end up with results that are quite different from our invention's results. In patent 2009/0016948 A1 they utilize electrolysis to obtain oxygen through a basic solution with Mercury casted at very high temperatures (above 800 degrees Celsius). In contrast, our invention uses kinetic energy to produce a reaction that resembles the photosynthetic process we see in nature. The end products of our process are oxygen and glucose. As can be seen, none of the references cited present important coincidences regarding the gaseous pollutants neutralizer system we have invented.

In the current market and at industrial level, there are different types of abatement and particulate material control systems; these include inertial separators (or cyclones), wet strippers (scrubbers), hose systems, and electrostatic precipitators. However, none of these systems are concerned with gas treatment and processing. For treating and processing gases there are only absorption systems of certain gases. The problem is that they require a large investment, and they are only intended for some types of industrial processes, such as NOₓ or Selective Catalytic Reduction. At the same time, none of the systems mentioned in the prior art are able to simultaneously control the particulate material and the processing of gases and obtain the same yield as our invention.

Our invention is able to control the particulate material and the processing of gas at a low cost, while improving upon existing systems in terms of efficiency. We are able to capture and transform toxic gases into more harmless substances with minimum odor.

The main systems that currently exist in the global industrial market are aimed at the reduction of particulate material. Within these systems are electrostatic systems, gas scrubbers, cyclones and bag filters. However, the effectiveness of these systems in capturing more volatile substances is limited to what may contain residual particulate material. As for the cost, it varies according to efficiency. The most expensive costs are the initial investment as well as maintenance costs for those systems that can capture 99% of particulate material.

The main objective of our invention is to capture and process the main gases causing the greenhouse effect which are produced by stationary sources of pollution, particularly CO₂, NOₓ, and SO₂. These gases are from smelters, power plants, industrial furnaces, and high-powered generator sets. All of the gases mentioned are most responsible for acid rain and global warming.

Researchers have found a new neutralizing system of gaseous pollutants which neutralizes toxic gas components, first releasing the lighter molecules (oxygen), to the atmosphere, and partly transforming these gases into harmless elements that can be released into the environment.

### Description of the invention

We have designed a gaseous pollutants neutralizer system that processes toxic components to produce oxygen and harmless liquid waste by a process of chemical symbiosis or molecular fusion using physical-chemical principles similar to the process of natural photosynthesis.

Our invention refers to a system of artificial photosynthesis that neutralizes harmful elements from any type of combustion thus reducing the initial volume and pressure of the gases. This is done through the kinetic energy produced by the accelerated recirculation of the gases through the molecular or gas resonance principle. Physical and chemical processes then release oxygen and harmless liquid substances. The system is comprised of a main chamber and a secondary chamber linked by a tube. The main chamber is comprised of:
- A main input gas pipe and a gas outlet;
- A tube with nozzles that allows the passage of steam in a steam curtain;
- A propeller located inside of the main chamber;
- A first flexible tube placed on the upper side and exiting from the top face of the main chamber. It rejoins the main chamber in the main entrance of the gases. The main chamber has at least two additional flexible tubes leaving the sides of the main chamber;
- An electric motor to extract gases, that allows the pressure of the gases to enter through a flexible tube;
- An eviction tube of liquid waste located at the bottom on the inside of the main chamber;
- One exhaust duct for treated gases located in the rear of the chamber, which connects through a tube to the main chamber with a secondary chamber;

The secondary chamber is comprised of:
- An inlet gas tube coming from the main chamber and a gas duct outlet located on the upper end;
- Multiple foam units, foam units are connected together and each junction of the foam units has a perforated aluminum foil and a polyester fiber cloth with a high degree of absorption;
- A high powered centrifugal extractor that facilitates a gas outlet located outside the upper end of the secondary chamber;
- An evacuation tube for liquid waste located at the bottom of the secondary chamber, which allows for the removal of liquids.

The present invention also relates to an artificial photosynthetic process to neutralize harmful elements from any type of combustion, reducing the initial volume and pressure of the gases, through the kinetic energy produced by the accelerated recirculation of the gases through the molecular or gas resonance principle. Oxygen is then released along with harmless substances by means of physical and chemical processes. They are comprised of the following steps:
i) Step one: gases from the pollution source enter the main chamber and the gaseous mass makes contact with a curtain of steam. Then the gases are deflected and slow down moving into an internal propeller. Next the gas is sucked into a tube by an external motor, the gaseous mass moves toward the flexible tubes, at which point it is introduced back to the main chamber, allowing the gas to continuously recirculate. The reason for this is to produce an energy charge, which causes the gaseous mass to be soluble in water vapor.
ii) Step two: allow the gases to bind to each other with their chemical elements through the kinetic energy gained in the recirculation process. The compounds obtained in the circular walls of the main chamber condense and precipitate, and then are deposited at the bottom of the main chamber.
iii) Step three: The energetically treated gases from the first step enter the secondary chamber, facilitating the physical and chemical action of gases, in which they are drawn together by their similar elements, freeing the oxygen. Said oxygen is released together with the gaseous waste outwards towards the external output of the secondary chamber with the aid of a high-performance centrifugal extractor, capturing the liquid residue obtained in this process, and eventually eliminating the liquid residual by means of a stopcock that is located at the bottom of the secondary chamber.

The neutralizing process of contaminated gases is comprised of two main characteristics described below:
1. - An elementary physical-mechanical action.
   In the first stage the gaseous pollutants enter a processor or main chamber where mixing occurs and there is a fusion of gases. The main chamber is sealed airtight. The gases enter the main chamber through an external centrifugal extractor. Once the gases enter the main chamber of the system they first face a curtain of saturated water vapor that is at least 100°C. Then the gases make contact with a concave propeller blade with a diameter equivalent to the diameter of the main entrance tube of the gases which acts as a brake, and diffuses the gases that enter.
   Once the gases are inside the main chamber they are mixed with the saturated water steam that is injected or sprayed into the main chamber. The saturated water steam is injected or sprayed through a nozzle tube that forms the curtain of steam. The nozzle tube is located at the bottom of the main chamber. This mechanism for injecting or spraying saturated water steam also helps to lower the gas temperature in this step.
   In the second step the gases that have mixed with water steam enter three corrugated aluminum flexible tubes which are twice the length of the outer main chamber. The main flexible tube is located on top of the main chamber and two tubes are located on the sides of the main chamber. At the top of the main chamber there is an electric motor attached to the upper main duct.
   In the second step of the process, the accelerated gas recirculates, generating a sort of "gas or molecular resonance" from the kinetic energy released by the particles of the gases through a concentric centrifugal effect that occurs in the flexible tubes. This is when the accelerated air is able to mix with the gases and condense efficiently and quickly. The pressure from the inlet gases (which can vary from 1 to "x" bar) decreases, thus indicating that the system is processing contaminants. Through the process of recirculating the gases, the temperature of the gas decreases at least 10 °C in relation to the temperature of the original input, and the original pressure input of these gases falls by a bar or less.
   As the temperature decreases, it increases the effectiveness of the physical and chemical reactions involved in the process which convert the gaseous mass into a liquid mass that subsequently drops to the bottom of the main chamber by force of gravity.
   In the third step of this process a permeable filter is produced in a sealed cylindrical device, where the treated gases are supersaturated with moisture, and the moisture covers each of the internal filters, where the conversion of saturated water steam is performed. This coalesces with the entire exposed surface of each plastic foam filter contained in the secondary chamber to thereby make the physical-chemical process more efficient. The gases entering the secondary chamber have a temperature that is lower than the original temperature of the gas inlet into the main chamber. The gases are rich in moisture and they have a positive or negative energy charge, which are for the most part captured and neutralized. This allows for the release of oxygen molecules.
2. - A physicochemical secondary action.
   At first, this composite action -initiated in the first step and completed in the third step- is a physical action.
   In the secondary action there are three major factors involved: the temperature inside the chamber, the internal pressure of the chamber, and the humidity of the gases and water vapor.
   This action produces a transformation of the particulate material into thicker material by jointing with the atomically less dense (or lighter) material simultaneously and in an apparent chain reaction. This is due largely to the molecular or gas resonance process initiated in the second step. It is possible that there is an ion charge (positive or negative) to the more sensitive molecule, such as carbon, nitrogen, and sulfur. These molecules are attracted to the plastic foam filter which is installed in both the primary and secondary chambers, continuously and permanently. Energy loading gas molecules facilitate the chemical reaction of gases in the presence of steam to form more stable molecular bonds.
   In this reaction there are different neutral compounds (such as bicarbonates and sulfates to a lesser extent), which makes the main pollutants (such as CO, CO₂, NOₓ y SO₂) easier to solute. Pollutants are thus converted from a primarily gaseous state to a liquid state, and then, upon drying, they become solids, forming bicarbonates, sulfates, or glucose (in a greater percentage than the rest of the residues) and possibly starch and cellulose molecules. Put simply, there is an atomic bonding effect which transforms gases into higher molecular weight elements than their natural state (forming glucose molecules, and probably starch and cellulose). This mechanism precipitates the elements of higher molecular weight and more dense molecular structure to an inner processing area. This also helps the system to more effectively absorb and capture substances of lower molecular weight and certainly more volatile, but it always leaves free oxygen molecules to produce chemical reactions that join each stable chemical compound (carbon, nitrogen, hydrogen, sulfur, etc.). Said simple chemical compounds are transformed into more complete chemical elements with higher molecular weight and denser molecular structures. As a result, said process frees oxygen molecules, thus releasing a higher percentage of oxygen (in relation to the flow of gas entering and leaving the system) than were initially introduced in the first step of the process.
   This process, for the most part, is homologous to natural photosynthesis, since CO₂ and H₂O are used to produce liquid glucose, and a large amount of pure oxygen is released at the end of the process. The formation of other chemical compounds from gases other than CO₂ is not obtained or derived from glucose-rich carbon bonds, but rather it is obtained depending on the molecular equivalent gas (e.g. SO₂ involves other molecular combination with H₂O molecule).
   According to the results obtained from the detailed examples below, it can be noted tat the system of our invention is able to purify and decrease the pressure and the original volume of gas, converting the material into less toxic compounds in comparison with the material that initially entered the system. This causes molecules to disintegrate, possibly due -as mentioned above- to the molecular or gas resonance principle, and the kinetic energy released therein, new atomic bonds are formed with similar elements, changing the original molecular composition of the compounds. The efficiency of our invention's system is such that the treated liquid also has the feature of neutralizing the presence of bacterial microorganisms which prevents the formation of rust or other bacterial flora within the system. The theoretical-scientific principle achieving water vapor molecular symbiosis with the other toxic gases that make the system work is unique and exclusive in the world and at the time of the application for this patent it is unparallel in any physical-chemical process currently being studied by universities or specialized centers in the field. Our invention achieves a molecular change similar to photosynthesis, but instead of using light energy, kinetic energy and molecular resonance or gas resonant is used to achieve the same phenomenon. This is known as artificial photosynthesis.
   Our invention is comprised of a device designed to carry out the process of neutralizing gaseous pollutants. The device is comprised of two structures, a main chamber and a secondary chamber that are connected together by a stainless steel round tube, or other material that is made of plastic polymers.
   To better illustrate the system and process of the present invention we have included three figures described below:
   Figure A: This view shows the side longitudinal section of the main chamber.
   Figure B: This view shows the upper longitudinal section of the main chamber.
   Figure C: This view shows the side longitudinal section of the secondary chamber.

### DETAILED DESCRIPTION OF THE INVENTION

Figure A shows the main chamber (1) which is a stainless metal or plastic polymer cylindrical shape adapted to its function. The inner surface of the primary chamber is coated with steel material or polymer plastics to facilitate the decantation of saturated vapor gases. On the outside of the main chamber there are three flexible tubes (2) made of plastic or aluminum having concave internal relieves. A first flexible tube exits the top of the main chamber (1). Two other flexible tubes (2) emerge from each side of the main chamber (1). Each of the flexible tubes (2) ends in a tube that is attached to a duct (3) at the entrances of the main chamber at a point about equidistant from the center of the chamber. The flexible tubes exiting the main chamber are made of plastic or aluminum, and they have a toothed interior with semicircular concave surfaces and flow into the main duct (4) of inlet gas. The main duct (4) where the gases enter has a truncated cone shape; the final internal diameter of this duct is twice as wide as the outer diameter inlet, thereby facilitating the waste liquids to drain away within the principal chamber. The diameter of the main flexible tube is equivalent to 15%-20% of the internal diameter of the main chamber, and the lateral flexible tubes have a diameter equivalent to 10% of the internal diameter of the main chamber. The flexible tubes have a toothed surface which has a separation between folds corresponding to 5% of the internal diameter of each flexible tube and a height corresponding to 2.5% of the diameter of each tube. They are located on both sides of the main chamber, at an equal distance from each other. The duct (3) reaches the tubes; they are simultaneously joined to each of the flexible tubes (2). The duct (3) is located at the main entrance of the toxic gases, where recirculation occurs. The entrance of the toxic gases also houses the main duct (4) of inlet where toxic gases are introduced to the main chamber via an external extractor. Once inside the main chamber, the gases are received by a propeller (5) that has concave flanges serving as a primary barrier to the gas, causing the gas to decrease its strength and direction. The propeller (5) located in the center of the main chamber has concave flanges and uses the force of the entering gases to rotate and thus producing the deviation of the mixed gases towards the inner walls of the main chamber. Due to the inertial force, the gases are led to the rear of the main chamber where the gases encounter the first filtering step of the system which consists of a plastic foam sheet of expanded polyurethane foam with a density of 25 K/m³ and is at least 10cm thick, and a perforated aluminum plate or sheet that sits on the rear end (6) of the main chamber (1). The gases are diverted to the main chamber walls, addressing the effect of this inertial force and centrifugal characteristic of this process, towards the entrance of each flexible tube (7) where the gases lose temperature and bind together due to the centrifugal effect that is generated in each of the flexible tubes, which is also facilitated by the shape of the flexible tubes and through an electric extractor motor (8) located at

the entrance of the main flexible tube (7). The electric extractor motor (8) allows gases to mix with water vapor, which are then introduced back into the main chamber through three flexible tubes, producing a continuous circulation of gases. The electric extractor motor can also be located, if the model of fabrication requires so, on the other two flexible tubes, wherein the highest extracting power motor is located on a flexible tube that is wider and higher, and the two other motors have half the extracting power as the principal motor. They can be located on the side of the principal chamber at the exit of the other flexible tubes so as to increase the recirculation process.

The cylindrical structure of the main chamber of the device ends in a funnel -type terminal truncated cone form (10). The terminal truncated cone form (10) causes the treated gas to enter the second device structure, or secondary chamber, with a greater force, which causes the treated gas to settle in the first structure of the device, or primary chamber. Furthermore, in the inside bottom of the main chamber, the system has an evacuation pipe (11) with a stopcock which serves to dislodge the processed material resulting from said process which at this point is in a liquid state.

The secondary structure, or secondary chamber (12) shown in Figure C, is made of corrosion resistant metal or plastic polymers and also has a cylindrical shape with truncated cone ends. In the initial part of the secondary chamber (12) there are a series of foam units (13), which are used as converters of saturated water vapor and as absorbers of wet gas coming from the main chamber and as filter to retain the contaminants. The secondary chamber has at least 5 units of plastic foam at least 10cm in thickness, and a density of 25 K/m³ (kilograms per cubic meter). The foam is made of expanded polyurethane which is the best compound used and tested so far because of its high retention capacity and water absorption. The plastic foam units convert the saturated vapor from the main process in which water is bonded across the exposed surface of the foam, facilitating the physical-chemical process above described as well as the filtering of gases. Foam units are separated by thin perforated aluminum sheets (14) covered with polyester fibers that are located between each gap of the plastic foam units (13). Before the number of foam units (13), in the bottom of the secondary chamber there is a metal mesh (15) or a plastic polymer mesh, which serves both to support the weight of foam units (13) and the thin perforated aluminum sheets (14), when this secondary chamber is installed vertically in relation to the main chamber. The secondary chamber has an airtight structure. The outer lower part of the secondary chamber has a tube (16) of inlet gas coming from the main chamber. The tube (16) can be either straight or curbed, depending on the position of the secondary chamber, links the main chamber with the secondary chamber. The upper end of the secondary chamber has a high-performance centrifugal extractor (17). Each of the two ends of the secondary chamber has truncated cone structures made of corrosion resistant metal or plastic polymers. The structure of the lower end (18) facilitates the mixing and pressure entering of the gases, and the upper end structure (19) allows the gases to exit. The upper end structure (19) has an evacuation opening slightly wider than the lower end. The tube (16) connecting the main chamber with the secondary chamber has an evacuation tube (20) allowing the liquid, or liquid waste produced by this step to evacuate if the plastic foam has not absorbed it.

Example of an application of this invention:
Once in the inside of the main chamber, the gases deflected by the central propeller (5) are mixed with saturated water steam which is injected or sprayed into the main chamber at a temperature not greater than 100 °C and at a pressure generally ranging between 1 and 3 bars, depending on the humidity of the gases. To facilitate the process of lowering the gas temperature, and thus helping to neutralize and release oxygen, gases are passed through a nozzle tube (9) that forms a curtain of steam of high concentration of moisture at a temperature not greater than 100 °C. The nozzle tube (9) is located at the inlet of the system's main chamber (1). The nozzle tube (9) is attached to a vaporizer which is located on the inside or outside of the main chamber.

The pressure in the accelerated recirculation process drops to levels of 1 Kg/cm² or 1 bar. This indicated that the system is processing contaminants. The inlet temperature of the gases to the main duct (4) of the truncated cone shape is usually between 50°C to 100°C, but once the gases enter again into the main chamber through the recirculation process, the temperature of the gases drops abruptly, falling to a temperature between 39° and 42 °C (depending on the input temperature of the gas). In this example, the temperature of the inlet gas is 55°C. In optimum performance, inside the main chamber the inner recirculation temperature of the flexible ducts is about 45°C.

The system we have developed is able to absorb more than 90% of all gases and 99% of the particulate material entering it. We were able to verify the efficiency of this system in the following experiment. At the outlet of the exhaust pipe of an electric generator running on gasoline at 1 hp (746 Watts), the system operate for more than two hours, obtaining an actual decrease in CO₂ and CO of 90%, NOx decreased by almost 62%, and oxygen increased from 8% to 19.7%. We observed at the input there was significant volumetric pressure, i.e. a volumetric pressure inlet 60I/min, obtaining a volumetric output pressure of approximately 5 to 1 I/min. All the measures recorded here were made on a percentage relative to the gas inlet and outlet of the system.

The tests performed verify that our invention can achieve an output between 18.5% and 19.7% with an actual increase of over 250% between the percentage of oxygen entering the system after the combustion process versus the oxygen released once the gases pass through the device. Therefore, the device and process we have invented would eventually achieve a percentage of totally breathable air. The results improve substantially when the same system is coupled or attached to two or more of this type of device for continuous operation. It is possible that, when combined, we can produce the first closed-loop combustion in the world where adequate oxygen is produced in part by the device without contaminating the atmosphere with an additional harmful gas.

Now we will describe in detail each section of the invention, known as autonomous system of artificial photosynthesis or SAFA, to clearly define each of the claims we have made about the system and the processes involved in this invention.

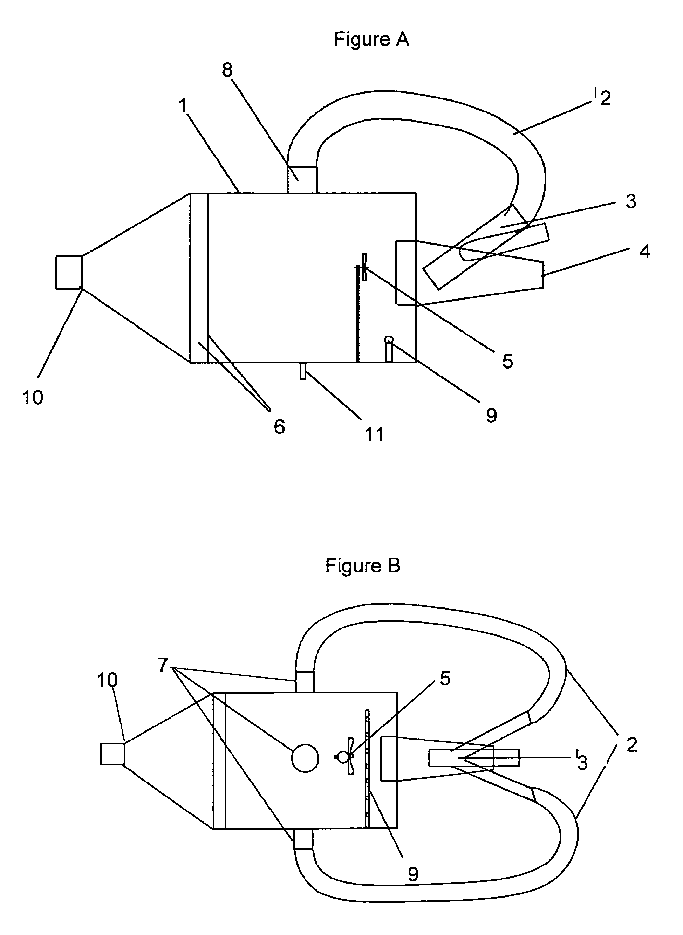

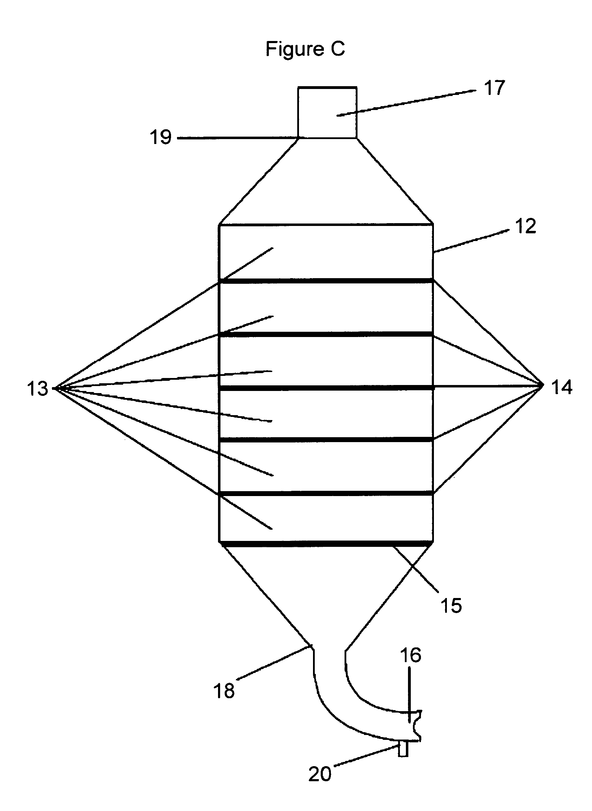

## Claims

1. An artificial photosynthesis system neutralizing harmful elements from any type of combustion, reducing the initial volume and pressure of the gases through the kinetic energy of an accelerated recirculation of the gases through the molecular or gases resonance principle, and then releasing oxygen and harmless liquid substances by physical and chemical processes wherein it is comprised of a main chamber and a secondary chamber linked by a tube, where the main chamber comprises:
- A gas main inlet duct and a gas outlet tube;
- A tube with nozzles that allows the passage of steam in the form of steam curtain;
- A propeller located at the center of the main chamber;
- A first flexible tube placed on the upper side and exiting out of the top face of the main chamber and rejoins the main chamber in the main entrance of the gases. The main chamber has at least two additional flexible tubes exiting the sides of the main chamber;
- An electric motor to extract gases, allowing pressurized gas to enter the flexible tubes;
- An eviction-tube of liquid waste, located at the bottom on the inside of the main chamber;
- One exhaust duct for treated gases located in the rear of the chamber which connects through a tube the main chamber to the secondary chamber;
The secondary chamber comprising:
- An entrance for the gases coming from the main chamber and a gas outlet duct located on the upper end;
- Multiple foam units which are connected together and each junction of the foam units has a perforated aluminum sheet and a polyester fiber cloth with a high degree of absorption;
- A high powered centrifugal extractor which facilitates the output of the gas located outside the upper end of the secondary chamber;
- An evacuation tube for liquid waste which allows the output of the fluid located at the bottom of the secondary chamber.

2. A system according to claim 1, wherein the main chamber is cylindrical and has a truncated cone shaped end funnel, and a truncated cone shaped inlet duct gas, made of anticorrosive metal or a special plastic suitable for temperatures. The internal surface of the primary chamber is coated with steel or plastic polymers to facilitate the decantation of saturated vapor gases, which terminates in a straight or curved steel tube which connects the main chamber to a secondary chamber.

3. A system according to any of the preceding claims wherein the flexible tubes emerging from the main chamber are made of plastic or aluminum, with a toothed concave semi-circular shape interior that flows into the main entrance of the gases. Two flexible tubes exit each outer side of the main chamber at equal distances from the inlet duct of the gaseous pollutants. The flexible tubes are attached to the main chamber by a steel tube or plastic polymer that is attached in equal distance to the main gas inlet duct having a truncated cone shape.

4. A system according to any of the preceding claims, wherein the main chamber has a tube with nozzles located at the bottom of the main chamber which allows the passing of steam and which is attached to a vaporizer.

5. A system according to any of the preceding claims wherein the propeller is made of concave metal or plastic blades and is operated with the dynamic force of the inlet gases, where the propeller is located immediately after the nozzle tube.

6. A system according to any of the preceding claims wherein the secondary chamber is cylindrical and has funnel-type truncated cone ends, it is made of corrosion resistant metal or plastic, and it is airtight.

7. A system according to any of the preceding claims wherein the secondary chamber has at least 5 units of plastic foam at least 10 cm high and 25 K/m³ (kilo per cubic meter) of density, the foam units are made of expanded polyurethane, and are joined together. Each joint has a perforated aluminum sheet that serves as support for the polyurethane foam and between the aluminum sheets there is a thin layer of polyester fiber of a high grade of absorption. In front of the foam units, in the bottom of the secondary chamber there is a metal mesh or anticorrosive plastic polymers that bear the weight of the foam units and the aluminum sheets when the secondary chamber is used vertically (with respect to the main chamber).

8. A system according to any of the preceding claims wherein the rear of the main chamber further comprises a sheet of expanded polyurethane plastic foam having at least 10 cm thick and a density of 25 K/m³ and a sheet of perforated aluminum.

9. A process of artificial photosynthesis neutralizing harmful elements from any type of combustion, reducing the initial volume and pressure of the gases through the kinetic energy of an accelerated recirculation of the gases through the molecular or gases resonance principle, and then releasing oxygen and harmless liquid substances by physical and chemical processes wherein it comprises the following steps:
i) The first step comprises: the gases from the pollution source enter the main chamber and make contact with a curtain of steam; the gases are deflected and slow down moving by an internal propeller; sucking the gases through an external extractor motor, sending the gaseous mass to the flexible tubes, and introducing the gases back into the main chamber, and allowing the gas recirculation;
ii) The second step comprises: the gases bind to each other with their chemical elements related by the kinetic energy achieved through the recirculation process, condensing and precipitating the compounds obtained in the circular walls of the main chamber and deposited in the bottom of the main chamber;
iii) The third step comprises: the gases energetically treated in the first step enter the secondary chamber; oxygen is released together with the gas waste outwards from the external output of the secondary chamber, capturing the liquid residue obtained from the process.

10. The process according to claim 9, wherein in the first step the gases from the pollution source enter the main chamber at a temperature of above 50°C, the entering of the gases is facilitated by the suction power of a centrifugal extractor located on the outside of the secondary chamber.

11. The process, according to any of claims 9 or 10, wherein in the first step the gaseous mass is contacted with a curtain of saturated steam at a temperature not exceeding 100°C and a pressure between 1 and 3 bars.

12. The process, according to any of claims 9 to 11, wherein in the first step the gases are deflected and slow down moving by an internal propeller of concave blades, the propeller is moved by the dynamic force of the gases entering the main chamber thus producing a series of centrifugal waves which drive the gas mixture to the internal walls of the main chamber.

13. The process, according to any of claims 9 to 12, wherein in the first step the gases are sucked in through an extractor motor located at the top of the main chamber which allow to send the gaseous mass towards the flexible tubes where the gases are mixed by the action of centrifugal and kinetic force produced within the flexible tubes.

14. The process, according to any of claims 9 to 13, wherein in the first step the gases sent to the flexible tubes are mixed by the action of centrifugal and kinetic force thus producing a low pressure of the gases at a pressure of less than 1 bar, the recirculated gases pressure in the main chamber is about 1 bar; all said process is known as molecular or gases resonance.

15. The process, according to any of claims 9 to 14, wherein in the second step the binding of the gases between each other and their related chemical elements transforms the gases in molecules of a greater molecular weight and molecular structure, such as glucose and eventually starch and cellulose.

16. The process, according to any of claims 9 to 15, wherein the third step facilitates the chemical and physical action of the gases which are attracted to each other and between their related elements thus freeing oxygen; said chemical and physical reaction is facilitated by the expanded polyurethane foam units acting as converters of saturated vapor to water, and absorbers; and filtering of contaminating gases along with the aluminum sheets and polyester fibers forming the filter units in the secondary chamber.

17. The process according to any of claims 9 to 16, wherein in the third step oxygen is outwardly released together with gaseous waste, the released gaseous waste flow is not greater than a tenth of the flow of original entry of gases from the source of pollution. The release of oxygen together with the gaseous waste to the outside of the secondary chamber is possible due to a high performance centrifugal extractor.

18. The process according to any of claims 9 to 17, wherein in the third step the liquid residue captured in this process is mainly glucose, and other chemical compounds which are molecularly rich in carbon bonds (starch and possibly cellulose), the captured liquid waste is removed by means of a stopcock located at the bottom of the secondary chamber.

19. The process according to any of claims 9 to 18, wherein the primary liquid residue obtained in the main chamber can be removed by means of a stopcock which is located at the bottom of the primary chamber, and glucose (starch and cellulose) contained in this residual liquid may be decanted and used for commercial purposes.

20. The process according to any of claims 9 to 19, wherein the temperature inside the chamber is greater than 40 °C on average, the gases are saturated with moisture and water vapor sprayed to the steam curtain has a maximum temperature of 100 °C and a pressure lower than 3 bars.
